# EUROPEAN PATENT APPLICATION

(11) **EP 4 322 041 A1**
(43) Date of publication of application: **14.02.2024**
(21) Application number: 22306209.2
(22) Date of filing: 10.08.2022
(51) Int. Cl.: G06F 30/17, G06F 30/23, H02J 13/00, G06F 113/04, G06F 113/10, G06F 111/06, G06F 119/06

(54) **METHOD FOR DESIGNING AND MANUFACTURING HIGH AND/OR MEDIUM VOLTAGE ELECTRIC COMPONENTS**

(71) Applicant: Nexans, 92400 Courbevoie (FR)
(72) Inventor: DOEDENS, Espen, 1788 HALDEN (NO); CLASEN, Geir, 1781 HALDEN (NO); NESTENG, Bard Magnus, 1640 RADE (NO)
(74) Representative: Ipsilon

(57) **Abstract**

A method for designing and manufacturing high voltage and/or medium voltage electric components, which comprises receiving electric specifications for the component to be manufactured (501), receiving geometric boundaries for the component to be manufactured (502), producing an initial 3D design of the component to be manufactured (503), optimizing the initial 3D design in accordance with the electric specifications and the geometric boundaries (504), providing a 3D geometry of the optimized 3D design representing the component to be manufactured (505), and manufacturing the component (506).

## Description

### Technical field

The present invention relates to high voltage and medium voltage equipment, in particular to the field of engineering and design of high or medium voltage electric system facilities, such as power networks, substations, switchyards, labs, converter halls, etc. More particular the invention relates to a method for inspecting and designing high voltage and/or medium voltage components.

### Background

High and medium voltage power networks and electric system facilities such as switchyards or switching installations as part of substations for power distribution in such networks, include primary or field devices, such as electrical cables, lines, busbars, switches, generators, power transformers and instrument transformers.

HV electrodes, such as toroid electrodes and grading rings on HV potential, inside labs, converter halls, substations, etc., are used to limit the local electric field strength in ambient or controlled air environments. HV cable terminations connecting cables to busbars in the indoor and outdoor switchyards thus need immensely large volume electrodes, comprising a combination of spherical and cylindrical shapes, with large minimal radiuses to ensure that local field strength in air does not exceed its breakdown strength (determined by Pachen's law). Too small radii can lead to high level of corona discharges as well as flashovers and breakdown of the air gap, which also can damage the electrodes and components nearby. This creates the following problems:
- The large toroid electrodes are expensive to manufacture, and due to the relatively small production volumes, the industry of scale does not fully apply to such limited products.
- The design is traditionally done by taking a large radius in axis-symmetry, and computing the local field strengths. The manufacturing involves forming these electrodes from one or several bend-tubes or spun aluminum. Some cases exist for Rogowski cup covered electrodes. Tailoring the HV electrode design to the particular site of installation is very uncommon.
- A damage to a HV torus is often very costly to fully repair, and there is often needed a replacement of the full electrode.
- Sometimes, cable terminations need to be installed in offshore platform substations, (or small HV labs) where space is extremely limited. When spacing to nearby ground planes approaches minimal criteria there is no possibility to locally adapt the electrode geometry. In labs this often results in high degrees of corona, forcing special, temporary, fixes with flexible hoses, extra smooth surface finishes, etc. or, ultimately, an expensive enlargement of the converter halls.
- There are no tools to assess if HV electrodes are correctly dimensioned other than drawing them in 3D in the actual environment, and manually adjusting their shape until design criteria (such as thresholds or maximum/minimum values for local E-field strength) are met.
- While HV insulators are made to be self-cleaning by means of hydrophobicity, no such technology is applied to the HV electrodes. Heavy pollution and salt fog conditions can reduce the performance of electrodes in severe conditions.

As mentioned above, prior technical solutions involve forming the large electrodes, such as toroid electrodes from spun aluminum or tubular weldments, or other large, costly assemblies. Furthermore, the design method often involves setting the radii for these components assuming a certain minimum spacing to adjacent equipment, with very little ability to fine tune designs for specific tailored applications.

There is thus a need for a method and systems that solves the above-mentioned problems and provides the possibility of designing high voltage assemblies as space effective as possible while still ensuring all safety and operational precautions are maintained.

The object of the invention is achieved by means of the patent claims.

The system, which will be described below, comprises at least some of the following advantages:
- Flexibility to make HV electrodes tailored to the customer application
- Optimization processes that ensure corona free electrodes for cramped substations (such as within offshore converter stations).
- Ability to make shapes for complex lab setups.
- Segmentation of large HV electrodes into smaller parts can enable cost-efficient scaling and enable cheaper repairs.

A method for designing and manufacturing high voltage and/or medium voltage electric components, comprises in one embodiment
- receiving electric specifications for the component to be manufactured,
- receiving geometric boundaries for the component to be manufactured,
- producing an initial 3D design of the component to be manufactured,
- optimizing the initial 3D design in accordance with the electric specifications and the geometric boundaries,
- providing a 3D geometry of the optimized 3D design representing the component to be manufactured, and
- manufacturing the component.

The initial design can in some embodiments be based on traditional design of the component, for example standard HV electrodes. Alternatively or additionally, the initial design can be based on standard equations for spheres and/or cylinders. The initial design can also in some embodiments be based on previously designed components, for example if a component is to be replaced, a facility is to be expanded and more components are needed, or for new facilities which can be based on previous manufactured components.

Manufacturing of the component can be done by means of additive manufacturing. Additive manufacturing is a process that uses data (CAD) software or 3D object scanners to direct hardware to deposit material, layer upon layer, in precise geometric shapes, ie adding material to create an object. Examples of additive manufacturing methods are "3D printing" and "rapid prototyping".

The geometric boundaries may comprise a 3D image of a room where the component is to be installed.

In some embodiments, the electric specifications comprise thresholds for local field strength. In these cases the optimizing of the initial 3D design can comprise simulating local field strength over the surface of the 3D design and changing radii of the surface of the 3D design until the simulated local field strength is below the thresholds over the full surface of the 3D design.

In some embodiments, the surface of the components are treated by a surface treatment after manufacturing.

In some embodiments, the 3D geometry is partitioned into smaller segments and each segment is manufactured separately. The component segments are then assembled after manufacturing.

The invention will now be described in more detail by means of examples and with reference to the figures.
Fig. 1 illustrates an example of a 3D surface geometry measurement of a surface of a cable.
Fig. 2 illustrates an example of a high-voltage electric system facility.
Fig. 3 illustrates an example of a HV indoor switchyard on land.
Fig. 4 illustrates an example of a topology optimization process for optimal mechanical strength - weight ratio of 3D printed parts.
Fig. 5 is a flow chart illustrating steps of a method for topology optimization for HV electrodes.

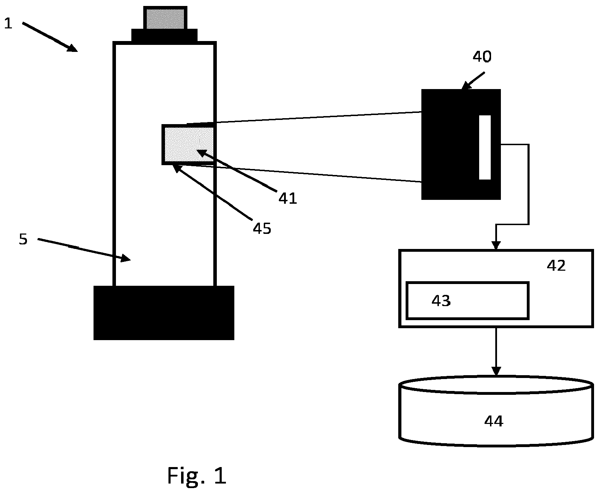

Fig. 1 is a schematic illustration of an example of a system for scanning a part of an electric facility, in this example the surface 5 of a cable end 1. The sizes of various object of the illustration are not in scale. The system comprises a non-contact surface scanner 40. The non-contact surface scanner 40 is directable to an area of interest 45.

In one embodiment, the non-contact surface scanner 40 may be a 3D laser scanner. The scanner may also be other types of non-contact surface scanners, for example white line scanners using projected white lines able to project up to 1,500,000 measurements/s and/or 99 white light scanning lines, or other kinds of suitable scanners.

The non-contact surface scanner 40 is arranged to measure the distance to the surface 5 of the area of interest. In the example in the figure, the field-of-view 41 of the non-contact surface scanner corresponds to the area of interest, but the area of interest 45 on the surface 5 may be larger or smaller by the field-of-view or scanning area of the non-contact surface scanner 40. The field-of-view may be round, rectangular, linear or any other shape as determined by the non-contact surface scanner. The non-contact surface scanner 40 is movable around the cable 1 such that the surface 5 of the cable 1 is covered by a plurality of sub-areas in order to ensure that the entire area of interest is scanned. The size of plurality of sub-areas may vary, for example by varying the distance between the non-contact surface scanner 40 and the cable 1. In one embodiment the non-contact surface scanner 40 is freely movable in any direction around the cable 1, such as a handheld 3D laser scanner.

The non-contact surface scanner should 40 know its position and direction in 3D space, for example by recognizing a plurality of markers (not shown) positioned on the surface 5. The markers may be stickers or sterile clamps with specific patterns or markers thereon. The markers will result in "NaN" (not a number = empty) areas underneath them, however, the scan can be paused, markers/clamps relocated and then the measurement can also scan the area under the markers. In another embodiment the non-contact surface scanner 40 may be mounted to a fixture or jig, e.g. mountable to the HV-cable, such that the non-contact surface scanner 40 may be moved up/down and around the surface 5 to completely fill the area of interest 5 with sub-areas. In this way, using markers may be avoided. In other embodiments, the non-contact surface scanner 40 can be arranged in a fixture or jig, and the cable may be moved relative to the scanner 40.

In some embodiments, the geometry of the scanned surface itself may be used as reference for the position of the non-contact surface scanner 40 itself in 3D space.

The illustrated system also comprises an analysis part 42. The analysis part 42 is in communication with the non-contact surface scanner 40 over a wired or wireless communication link. In one embodiment, at least parts of the analysis part 42 may be comprised in the non-contact surface scanner 40. The analysis part 42 comprises a processor 43 adapted to process measurement data from the non-contact surface scanner 40 for each of the plurality of sub-areas to create a continuous 3D surface geometry measurement of the area of interest 45, and thus the surface to be evaluated. The continuous 3D surface geometry measurement can be processed to evaluate the characteristics of the surface and can also create an image of the surface for evaluation and for later reference.

In one embodiment, the analysis part can provide a go/no go evaluation. In this way an operator may receive a go or a no go after the scan is performed, allowing or disallowing the operator to proceed with the cable part.

The analysis unit can use the above to identify the worst regions of the area of interest, such as deeper cuts, nicks, scratches, steps, for example by means of finite element method (FEM). The method can calculate local computed FEF and local computed partial discharge inception voltage (PDIV).

In one embodiment, the analysis part 42 is adapted to transmit the continuous 3D surface geometry measurement to a storage device 44 as a 3D topographic map of the area of interest 45. The analysis part 42 is in communication with the storage device 44 over a wired or wireless communication link. The storage device 44 may be on on-premise server or cloud server. The 3D topographic map of the surface 5 of the cable 1 on the server 44 may be accessible to users and clients for future reference of the cable system.

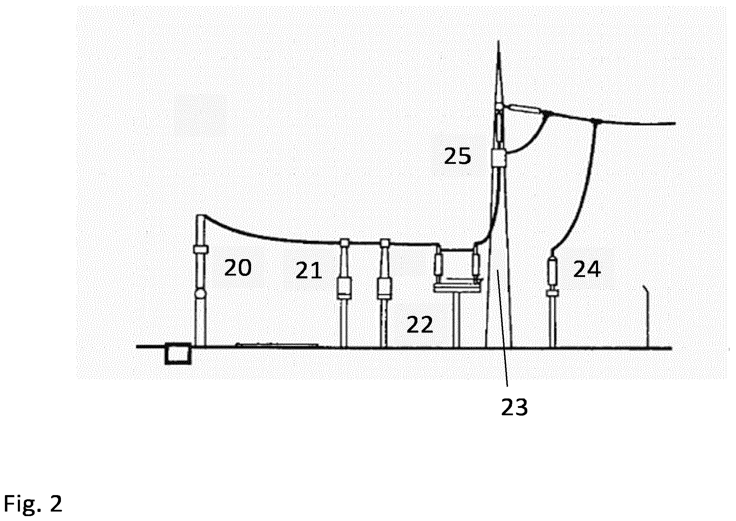

Fig. 2 illustrates an example of a high-voltage electric system facility for which the system described herein can be used. The facility comprises in this example a circuit breaker 20, a current transformer 21, and inductive voltage transformer 22, a feeder disconnector 23, a capacitor 24 and a line trap 25. This is only one example of a electric system facility, but illustrates the fact that such facilities often comprise a large number of different components which preferably are assembled together as compact as possible, while still maintaining all safety precautions and electric design criteria. The following description describes a method for designing and manufacturing HV electrodes, but the method can be used for other components for electric system facilities as well.

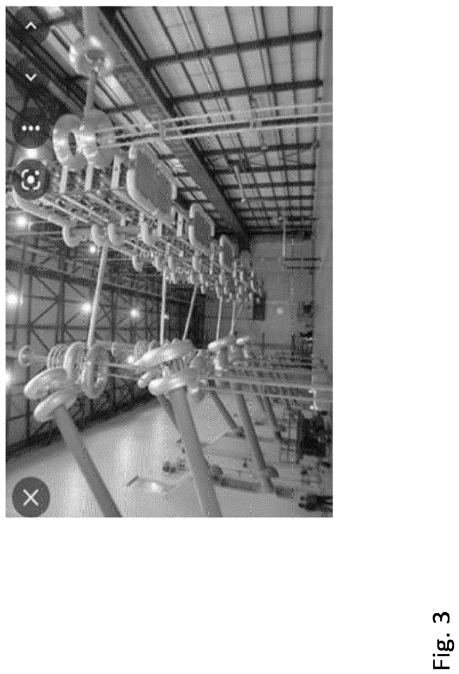

Fig. 3 illustrates an example of a HV indoor switchyard on land. This illustrates how cramped such switchyards may be, and thus the need for better methods. Offshore switchyards are often even more cramped due to space restrictions offshore.

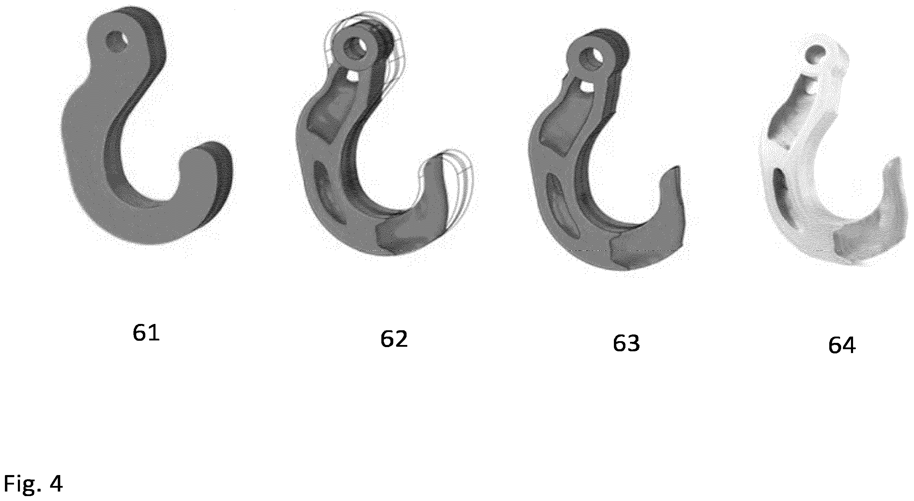

For mechanical parts, topology optimization and additive manufacturing, such as 3D printing, are often use in symbiosis with each-other as the former creates the optimal design, and the latter is often the only manufacturing method that can create such complex shapes. Fig. 4 illustrates an example of a topology optimization process for optimal mechanical strength - weight ratio of 3D printed parts, in this example a hook. The process uses a mathematical method that optimizes material layout within a given design space, for a given set of loads, boundary conditions and constraints with the goal of maximizing the performance of the system. Topology optimization is different from shape optimization and sizing optimization in the sense that the design can attain any shape within the design space, instead of dealing with predefined configurations.

In the illustrated example, there is an initial design 61, which is optimized by use of for example a finite element method (FEM) to evaluate the design performance. The design is optimized using either gradient-based mathematical programming techniques such as the optimality criteria algorithm and the method of moving asymptotes or non-gradient-based algorithms such as genetic algorithms. The result is for example the design 62.

The result emerging from topology optimization is often fine-tuned for manufacturability and a verification model 63 can be made. In some cases, results from topology optimization can be directly manufactured using additive manufacturing; topology optimization is thus a useful tool for additive manufacturing. The hook 64 in the example illustrates the hook printed by 3D printing after finalizing the process.

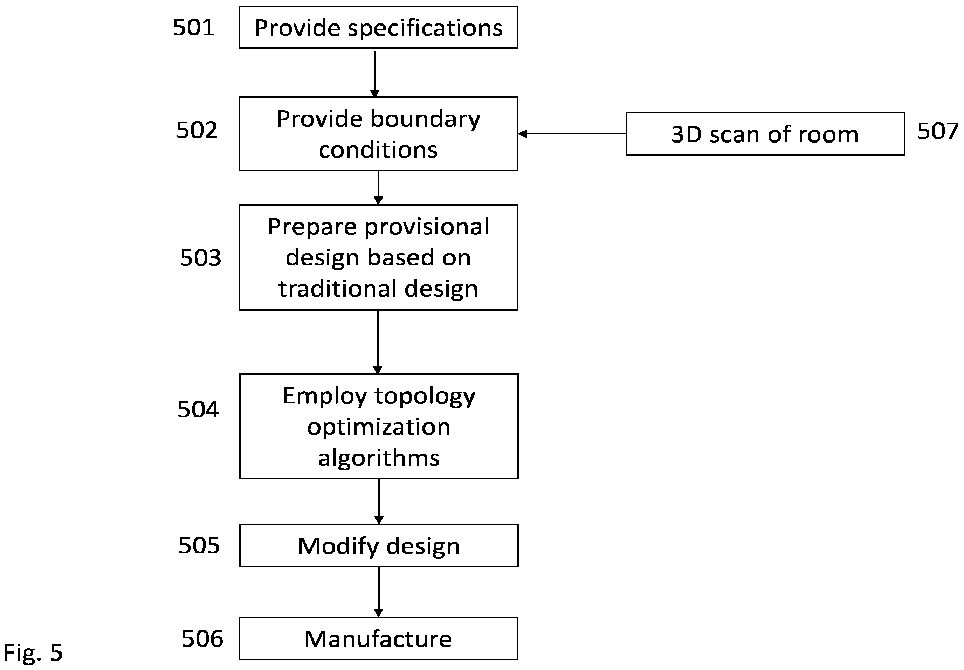

The same approach can be utilized for HV electrodes that control the field around the air insulated topsides of HV equipment. For example, the topology optimization for HV electrodes can use the following steps, which are schematically illustrated in figure 5:
- To receive detailed information regarding HV, floating, ground potentials, required busbar connections, layouts for the lab or installation circuits in 3D (step 501).
- To set up this layout in a digital environment, thus setting up the geometric boundary conditions and special constraints (Step 502). In this step, there may be provided a 3D image of the room where the HV electrodes will be installed and used in step 507, but this is not necessary for the process to work. The 3D image of the room may be provided by scanning the room with a 3D scanner.

- To simulate an initial 3D design in step 503, where a first "guess" is made using traditional HV electrode designs. Other methods for the initial design can be using analytical equations for spheres and cylinders. This initial design can be viewed as a provisional design, as modifications may be included in a later step.
- To perform a topology optimization computational approach in step 504, taking into account the electrical characteristics of the HV electrode. In this process the local radii of the 3D shape can be shrunk or increased until the local field strength on the entire surface of the electrode matches design criteria.
- To perform a "model cleanup" on the 3D shape in step 505, for example using additional requirements/limitations. This step results in a final geometric design which can be used as input to manufacture the HV electrode in step 506.

The 3D designed HV electrode can be manufactured completely in one single process, for example using additive manufacturing/3D printing.

Alternatively, the 3D geometry of the optimized 3D design can be partitioned into smaller segments in a way that exerts minimal impact on local field strengths, and then manufacture the partitioned segments through additive manufacturing or through a combination of additive manufactured parts and pre-made high volume parts such as small spun aluminum Rogowski cups, or similar off-the-shelf products.

The segments can then be assembled to the final product on site or in a production facility prior to transport to the installation site.

In some embodiments, the additive manufacturing could comprise the following features:
- 3D printed semi-conductive plastics, such as thermoplastic, thermoset or elastomeric materials. The surfaces may be treated during or after the manufacturing process with surface improvements, such as polishing, metallic deposition, levelling coatings and hydrophobic coatings, etc.
- To 3D print such parts using metal additive manufacturing. Also, in this case, the surfaces may be treated during or after the manufacturing process with improvements to surface quality such as polishing, metallic deposition, levelling coatings and hydrophobic coatings. Such surface treatments are particularly relevant for additive manufacturing processes, but can of course in some occasions be needed or advantageous for other manufacturing methods as well.

The method can also be used to repair existing HV electrodes. In this case, the process can comprise the following steps:
- 3D scanning of the defect area, for example by using a 3D scanner as described above.
- Tailor making a repair assembly in line with the method described above for manufacturing a HV electrode.
- To assemble and repair the defect on-site

In this example, the design and manufacture of a HV electrode has been described, but the method may be used to manufacture any other part or component.

## Claims

1. Method for designing and manufacturing high voltage and/or medium voltage electric components, comprising:
- receiving (501) electric specifications for the component to be manufactured,
- receiving (502) geometric boundaries for the component to be manufactured,
- producing (503) an initial 3D design of the component to be manufactured,
- optimizing (504) the initial 3D design in accordance with the electric specifications and the geometric boundaries,
- providing (505) a 3D geometry of the optimized 3D design representing the component to be manufactured, and
- manufacturing (506) the component.

2. Method according to claim 1, wherein the initial design is based on traditional design of the component.

3. Method according to claim 1, wherein the initial design is based on previously designed components.

4. Method according to one of the previous claims, wherein manufacturing of the component is done by means of additive manufacturing.

5. Method according to one of the previous claims, where the geometric boundaries may comprise a 3D image of a room where the component is to be installed.

6. Method according to one of the previous claims, wherein the electric specifications comprise thresholds for local field strength, and where optimizing of the initial 3D design comprises simulating local field strength over the surface of the 3D design and changing radii of the surface of the 3D design until the simulated local field strength is below the thresholds over the full surface of the 3D design.

7. Method according to one of the previous claims, comprising performing a surface treatment of the surface of the components after manufacturing.

8. Method according to one of the previous claims, wherein the 3D geometry is partitioned into smaller segments and each segment is manufactured separately, and the component segments are assembled after manufacturing.
